# EUROPEAN PATENT APPLICATION

(11) **EP 4 746 136 A1**
(43) Date of publication of application: **20.05.2026**
(21) Application number: 25206537.0
(22) Date of filing: 02.10.2025
(51) Int. Cl.: H01M 16/00, H01M 8/18, H01M 10/613, H01M 10/6557, H01M 10/6568, H01M 10/66, H01M 50/209

(54) **HYBRID BATTERY PACK**

(30) Priority: 11.11.2024 KR 20240159000
(71) Applicant: SAMSUNG SDI CO., LTD., Yongin-si, Gyeonggi-do 17084 (KR)
(72) Inventor: KOO, YONGRACK, 17084 YONGIN-SI (KR)
(74) Representative: Regimbeau

(57) **Abstract**

Provided is a hybrid battery pack including a plurality of battery modules (100) disposed side by side, and a redox flow battery (200) disposed at one side of the plurality of battery modules (100), wherein an electrolyte path along which an electrolyte circulating in the redox flow battery (200) flows is disposed between the plurality of the battery modules (100).

## Description

### FIELD

The present disclosure relates to a hybrid battery pack.

### BACKGROUND

Unlike primary batteries that cannot be charged, secondary batteries are batteries that can be charged and discharged. Low-capacity battery cells are used in small portable electronic devices such as smartphones, feature phones, laptop computers, digital cameras, and camcorders, and high-capacity battery cells are widely used as driving power sources and power storage batteries for motors in hybrid vehicles, electric vehicles, and the like. Such a battery cell includes an electrode assembly including a positive electrode and a negative electrode, a case for accommodating the same, and an electrode terminal connected to the electrode assembly.

For example, redox flow batteries (RFBs) are secondary batteries that may be repeatedly charged and discharged through the electrochemical reversible reaction of an electrolyte to store energy for a long period of time and use the stored energy. Unlike existing secondary batteries, such an RFB is a system which is charged or discharged through energy exchange between active materials dissolved in an electrolyte, and a stack and an electrolyte tank, which respectively determine the capacity and output characteristics of a battery, are provided independently, thereby obtaining advantages in that a battery is freely designed, and also there is little restriction in installation space.

### SUMMARY

According to the invention, there is provided a hybrid battery pack as defined in the claims.

The present disclosure provides a hybrid battery pack in which a battery cell is effectively cooled simultaneously while the capacity of a battery pack is improved.

However, the technical objects to be solved by the present disclosure are not limited to the above, and other objects that are not described herein will be clearly understood by those skilled in the art from the following disclosure.

Embodiments of the present disclosure provides a hybrid battery pack including a plurality of battery modules disposed side by side, and a redox flow battery disposed at one side of the plurality of battery modules, wherein an electrolyte path along which an electrolyte circulating in the redox flow battery flows is disposed between the plurality of the battery modules.

In embodiments, the redox flow battery may include a positive electrode cell, a negative electrode cell disposed to face the positive electrode cell, a separator disposed between the positive electrode cell and the negative electrode cell, a pump configured to circulate the electrolyte, a first electrolyte path along which the electrolyte flows, and a second electrolyte path along which the electrolyte flows.

In embodiments, the plurality of battery modules may be divided and disposed at each of the positive electrode cell and the negative electrode cell of the redox flow battery.

In embodiments, the plurality of battery modules disposed at the positive electrode cell may be surrounded by the first electrolyte path, and the plurality of battery modules disposed at the negative electrode cell may be surrounded by the second electrolyte path.

In embodiments, the plurality of battery modules may each include a plurality of battery cells, and the plurality of battery cells may include prismatic battery cells.

In embodiments, the first electrolyte path or the second electrolyte path may be configured to cover at least three surfaces of each of the battery cells and may be disposed in a zigzag shape between the battery cells adjacent to one another.

In embodiments, the first electrolyte path or the second electrolyte path may be further configured to cool the battery cells.

In embodiments, the plurality of battery modules and the redox flow battery may operate independently.

In embodiments, the positive electrode cell may include a positive electrode and a positive electrode electrolyte, and the negative electrode cell may include a negative electrode and a negative electrode electrolyte.

Embodiments of the present disclosure provides a hybrid battery pack including a plurality of battery modules disposed side by side, a redox flow battery disposed at one side of the plurality of battery modules, and a cooling part disposed between the plurality of battery modules and the redox flow battery, wherein an electrolyte path along which an electrolyte circulating in the redox flow battery flows is disposed between the plurality of the battery modules.

In embodiments, the redox flow battery may include a positive electrode cell, a negative electrode cell arranged to face the positive electrode cell, a separator disposed between the positive electrode cell and the negative electrode cell, a pump circulating an electrolyte, a first electrolyte path through which the electrolyte flows, and a second electrolyte path.

In embodiments, the first electrolyte path or the second electrolyte path may include an inlet side and an outlet side, and the inlet side and the outlet side may be disposed in the cooling part.

In embodiments, the inlet side and the outlet side may be disposed in a zigzag shape in the cooling part.

In embodiments, the plurality of battery modules may be divided and disposed at each of the positive electrode cell and the negative electrode cell of the redox flow battery.

In embodiments, the plurality of battery modules disposed at the positive electrode cell may be surrounded by the first electrolyte path, and the plurality of battery modules disposed at the negative electrode cell may be surrounded by the second electrolyte path.

In embodiments, the plurality of battery modules may each include a plurality of battery cells, and the plurality of battery cells may include prismatic battery cells.

In embodiments, the first electrolyte path or the second electrolyte path may be configured to cover at least three surfaces of each of the battery cells and may be disposed in a zigzag shape between the battery cells adjacent to one another.

In embodiments, the first electrolyte path or the second electrolyte path may be further configured to cool the battery cells.

In embodiments, the plurality of battery modules and the redox flow battery may operate independently.

In embodiments, the positive electrode cell may include a positive electrode and a positive electrode electrolyte, and the negative electrode cell may include a negative electrode and a negative electrode electrolyte.

### BRIEF DESCRIPTION OF THE DRAWINGS

The accompanying drawings illustrate embodiments of the present disclosure and, together with the following detailed description, serve to provide further understanding of the technical spirit of the present disclosure. However, the present disclosure is not to be construed as being limited to the details shown in the drawings, in which:
FIG. 1 is a schematic view illustrating an example of a hybrid battery pack according to embodiments of the present disclosure;
FIG. 2 is a schematic view illustrating an example in which battery cells are disposed in the hybrid battery pack of FIG. 1;
FIG. 3 is an enlarged view of area A in FIG. 2;
FIG. 4 is a schematic perspective view illustrating an example of the battery cell of FIG. 2;
FIG. 5 is a schematic cross-sectional view illustrating an example of a cross section along line III-III' of FIG. 4;
FIG. 6 is a schematic view illustrating an example of a hybrid battery pack according to embodiments of the present disclosure; and
FIG. 7 is an enlarged view of area B of FIG. 6.

### DETAILED DESCRIPTION

Hereinafter, embodiments of the present disclosure will be described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best description. Accordingly, embodiments disclosed in the present specification and configurations illustrated in the drawings are merely most exemplary embodiments of the present disclosure and do not represent all of the technical ideas of the present disclosure, and thus it should be understood that there may be various equivalents and modifications that may substitute these at the time of filing of the present application.

Further, "comprise and include" and/or "comprising and including" used in this specification should be interpreted as specifying the presence of described shapes, numbers, steps, operations, members, elements, and/or groups thereof and do not exclude the presence or addition of other shapes, numbers, operations, members, elements, and/or groups thereof.

In some embodiments, for a better understanding of the present disclosure, the accompanying drawings are not illustrated on an actual scale and sizes of some elements can be exaggerated. In some embodiments, the same reference numbers may be assigned to the same components in different embodiments.

It will be understood that, although the terms first, second, and the like are used herein to describe various components, these components should not be limited by these terms. These terms are only used to distinguish one component from another component, and a first component may also be a second component unless particularly described otherwise.

Through the specification, each component may be singular or plural unless particularly described otherwise.

Arrangement of any component "on" a component includes not only the arrangement in which any component is disposed in contact with the top surface (or bottom surface) of the component, but also the arrangement in which other components may be disposed between the component and any component disposed on (or under) the component.

Also, when it is said that a first element is "connected" or "coupled" to a second element, this may mean that the elements are directly connected or coupled to one another, but it should be understood that a third element may be "interposed" between the elements or the elements may be "connected" or "coupled" to one another via the third element. Further, the term "electrically coupled" may mean not only "directly coupled" but also may include "coupled via other interposing component."

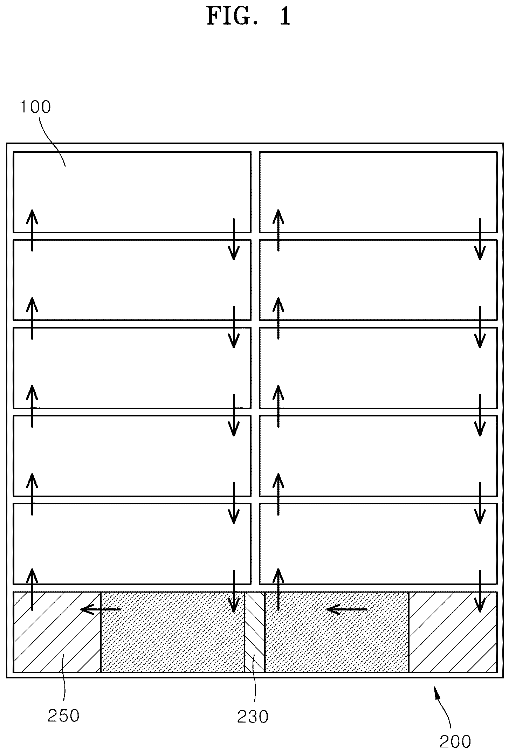

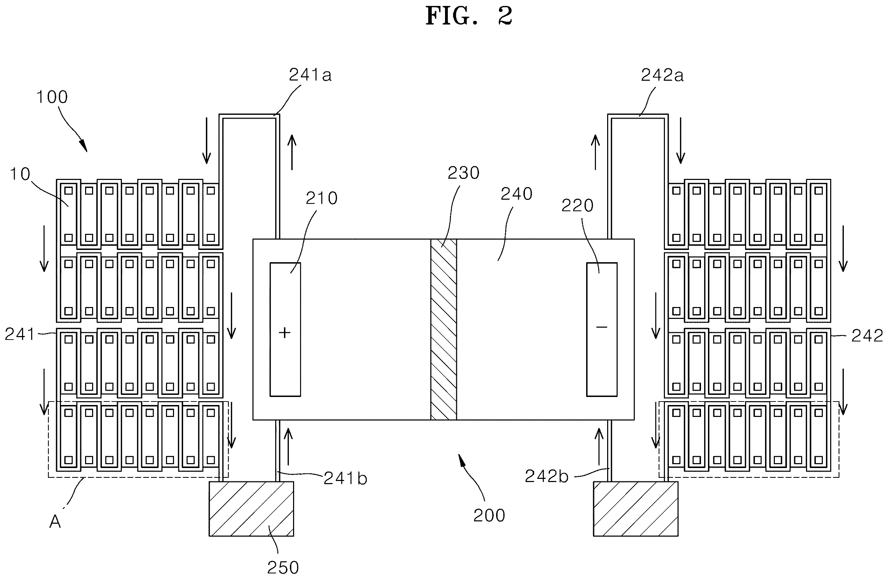

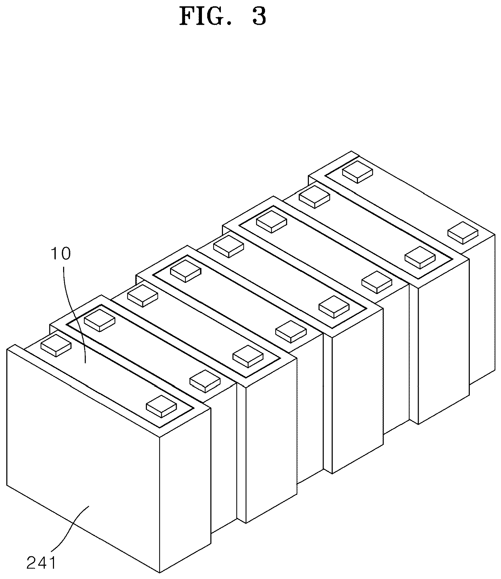

FIG. 1 is a schematic view illustrating an example of a hybrid battery pack according to embodiments of the present disclosure. FIG. 2 is a schematic view illustrating an example in which battery cells 10 are disposed in the hybrid battery pack of FIG. 1. FIG. 3 is an enlarged view of area A in FIG. 2.

Referring to FIG. 1, the hybrid battery pack may include a plurality of battery modules 100 disposed side by side and a redox flow battery 200 disposed at one side of the plurality of battery modules 100, and electrolyte paths 241 and 242 along which an electrolyte circulating in the redox flow battery 200 flows may be disposed between the plurality of battery modules 100.

Referring to FIG. 2, as a specific example, the battery module 100 may be divided and disposed at each of a positive electrode cell 210 and a negative electrode cell 220 of the redox flow battery 200. The plurality of battery modules 100 disposed at the positive electrode cell 210 may be surrounded by a first electrolyte path 241, and the plurality of battery modules 100 disposed at the negative electrode cell 220 may be surrounded by a second electrolyte path 242.

For example, the redox flow battery 200 may generally include the positive electrode cell 210, the negative electrode cell 220 positioned to face the positive electrode cell 210, a separator 230 positioned between the positive electrode cell 210 and the negative electrode cell 220, an electrolyte tank in which an electrolyte is stored, a pump 250 for circulating the electrolyte, and the electrolyte paths 241 and 242 along which the electrolyte flows. In the redox flow battery 200 of the present disclosure, instead of an electrolyte tank, the electrolyte paths 241 and 242 may be disposed to be elongated in a form surrounding the battery cells 10 so that a sufficient amount of an electrolyte may be stored in the electrolyte paths 241 and 242. That is, a sufficient amount of an electrolyte for operating the redox flow battery 200 may circulate along the electrolyte paths 241 and 242 of the redox flow battery 200 instead of the electrolyte tank. In some embodiments, since a temperature of the electrolyte of the redox flow battery 200 is maintained in a range of 0 °C to 40 °C, cooling performance may be secured when the electrolyte paths 241 and 241 along which the electrolyte flows are disposed together with the battery cells 10.

For example, the positive electrode cell 210 included in the redox flow battery 200 includes a positive electrode and a positive electrode electrolyte. As an example, the positive electrode cell 210 may include vanadium as an electrolyte, and while the electrolyte circulates inside the positive electrode cell 210 by using vanadium hydrated in water as the electrolyte, charging/discharging occurs by an oxidation/reduction reaction of a redox couple derived from vanadium.

The positive electrode may include a flat plate structure, a grid-shaped mesh structure, a sponge-shaped felt structure, or the like. The positive electrode may include: a conductive metal such as gold (Au), platinum (Pt), or nickel (Ni); a conductive polymer such as polyacetylene or polythiophene; or carbon. Specifically, nickel felt, carbon felt, or graphite felt, which have a wide surface area and excellent electrical conductivity, may be used as the positive electrode.

The negative electrode cell 220 included in the redox flow battery 200 includes a negative electrode and a negative electrode electrolyte. As an example, the negative electrode cell 220 may include vanadium as an electrolyte, and when the electrolyte circulates inside the negative electrode cell 220 by using vanadium hydrated in water as the electrolyte, charging/discharging occurs by an oxidation/reduction reaction of a redox couple derived from vanadium.

The negative electrode may include a flat plate structure, a grid-shaped mesh structure, a sponge-shaped felt structure, or the like. The negative electrode may include: a conductive metal such as gold (Au), platinum (Pt), or nickel (Ni); a conductive polymer such as polyacetylene or polythiophene; or carbon. Specifically, nickel felt, carbon felt, or graphite felt, which have a wide surface area and excellent electrical conductivity, may be used as the negative electrode.

The separator 230 included in the redox flow battery 200 is provided between the negative electrode cell 220 and the positive electrode cell 210. The separator 230 may be an anion separator or a zwitterion separator. As an example, the separator 230 may block the movement of redox couples included in the positive electrolyte and the negative electrode electrolyte and may allow ions to selectively pass therethrough, thereby preventing active materials between the positive electrolyte and the negative electrode electrolyte from intersecting one another to cause contamination.

For example, the battery module 100 surrounded by the electrolyte paths 241 and 242 may include a plurality of battery cells 10, and in this case, the electrolyte paths 241 and 242 may be disposed between the battery cells 10.

Referring to FIG. 3, the first electrolyte path 241 may be disposed between the battery cells 10.

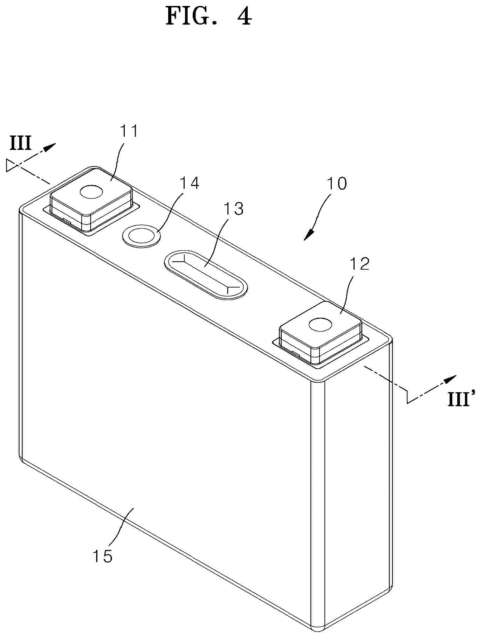

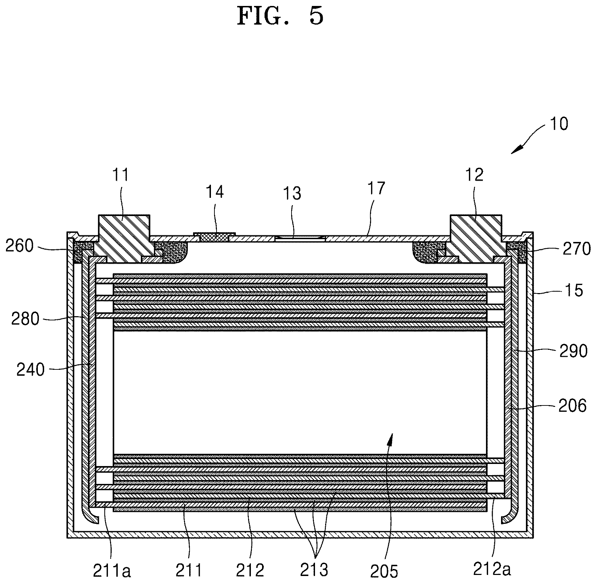

FIG. 4 is a schematic perspective view illustrating an example of the battery cell 10 of FIG. 2. FIG. 5 is a schematic cross-sectional view illustrating an example of a cross section along line III-III' of FIG. 4.

Referring to FIGS. 4 and 5 together, the battery cell 10 according to the present embodiment may include at least one electrode assembly 205 in which the separator 213, which is an insulator, is interposed between the positive electrode 211 and the negative electrode 212 and then wound, and a case 15 in which the electrode assembly 205 is embedded.

An example in which the battery cell 10 according to the present embodiment is a prismatic lithium ion battery cell will be described. However, the present disclosure is not limited thereto, and the present disclosure may be applied to various types of battery cells such as lithium polymer battery cells or cylindrical battery cells.

The positive electrode 211 and the negative electrode 212 may include coated portions which are areas in which an active material is applied onto a current collector made of thin metal foil, and uncoated portions 211a and 212a which are areas which are not coated with an active material.

The positive electrode 211 and the negative electrode 212 may be wound after the separator 213 which is the insulator is interposed therebetween. However, the present disclosure is not limited thereto, and the electrode assembly 210 may have a structure in which a positive electrode and a negative electrode, each including a plurality of sheets, are alternately stacked with a separator interposed between the positive electrode and the negative electrode.

The case 15 may form the overall exterior of the battery cell 10 and may be made of a conductive metal such as aluminum, an aluminum alloy, or nickel-plated steel. In some embodiments, the case 15 may provide a space in which the electrode assembly 210 is accommodated.

The battery cell 10 may include a cap plate 17 that covers an opening of the case 15, and the case 15 and the cap plate 17 may be made of a conductive material. Here, a first terminal 11 and a second terminal 12 electrically connected to the positive electrode 211 and the negative electrode 212 may be installed to pass through the cap plate 17 and protrude to the outside.

In some embodiments, outer peripheral surfaces of upper pillars of the first terminal 11 and the second terminal 12, which protrude outward from the cap plate 17, may be threaded and fixed to the cap plate 17 through nuts.

However, the present disclosure is not limited thereto, and the first terminal 11 and the second terminal 12 may have a rivet structure to be riveted or may be welded and coupled to the cap plate 17.

In some embodiments, the cap plate 17 may be made of a thin plate and may be coupled to the opening of the case 15. An electrolyte injection port 14 on which a sealing stopper may be installed may be formed in the cap plate 17, and a vent 13 in which a notch is formed may be installed.

The first terminal 11 and the second terminal 12 may be electrically connected to current collectors including first and second current collectors 240 and 206 (hereinafter referred to as positive and negative electrode current collectors) joined to a positive electrode uncoated portion 211a and a negative electrode uncoated portion 212a through welding.

For example, the first terminal 11 and the second terminal 12 may be coupled to the positive and negative electrode current collectors 240 and 206 through welding. However, the present disclosure is not limited thereto, and the first terminal 11 and the second terminal 12 and the positive and negative electrode current collectors 240 and 206 may be formed by being integrally coupled to one another.

In some embodiments, an insulating member may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17.

In some embodiments, according to the present embodiment, one end portion of a separation member that may be installed to face one side surface of the electrode assembly 210 may be installed between the insulating member and each of the first terminal 11 and the second terminal 12.

Here, the separation member may include first and second separation members 280 and 290.

Accordingly, one end portions of the first and second separation members 280 and 290 that may be installed to face one side surface of the electrode assembly 210 may be installed between the first and second lower insulating members 260 and 270 and the first and second terminals 11 and 12.

As a result, the first terminal 11 and the second terminal 12 welded and coupled to the positive electrode current collector 240 and the negative electrode current collector 206 may be coupled to the first and second lower insulating members 260 and 270 and one end portions of the first and second separation members 280 and 290.

For example, the battery cell 10 in which the first electrolyte path 241 is disposed between the battery cells 10 may include a prismatic battery cell 10, and the first electrolyte path 241 may cover at least three surfaces of the battery cell 10 and may be disposed in a zigzag shape between the battery cell 10 and an adjacent battery cell 10. In this way, since the first electrolyte path covers at least three surfaces of the battery cell 10 and is disposed in a zigzag shape between the battery cell 10 and the adjacent battery cell 10, the first electrolyte path 241 may be continuously connected and at the same time, an area in which the first electrolyte path 241 and the battery cell 10 exchange heat may be maximized so that the efficiency of cooling the battery cell 10 by the first electrolyte path 241 may be improved.

In some embodiments, an existing cooling path disposed in the battery module 100 to cool the battery cell 10 may be replaced with the electrolyte paths 241 and 242 of the redox flow battery 200 which is another battery, thereby improving the capacity of a hybrid battery pack according to embodiments of the present disclosure, and the redox flow battery 200 may operate independently from the battery module 100 to distribute the output of the hybrid battery pack, thereby preventing overload.

As a result, in the hybrid battery pack according to the embodiment of the present disclosure, the performance of cooling a battery cell may be secured by using an electrolyte circulation structure of a redox flow battery, and at the same time, a cooling space may be replaced with the redox flow battery to improve the capacity of a battery pack.

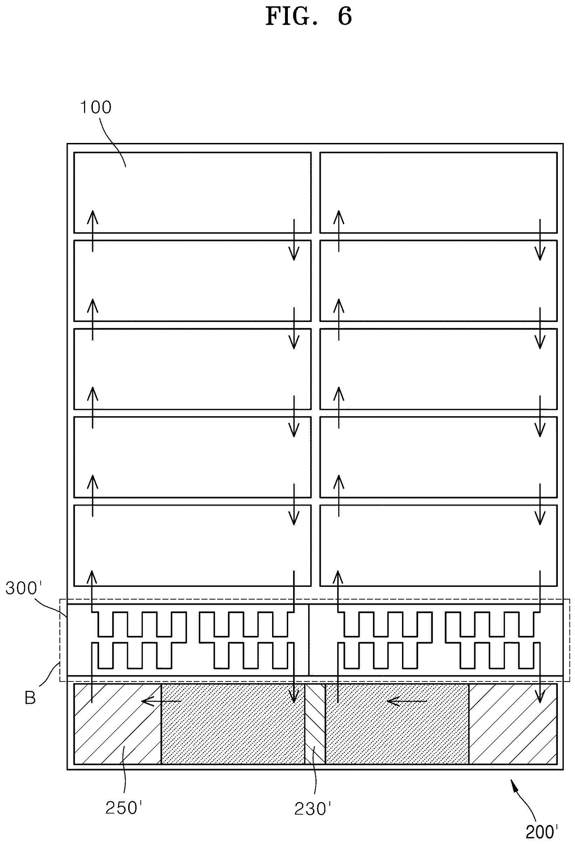

FIG. 6 is a schematic view illustrating an example of a hybrid battery pack according to embodiments of the present disclosure.

Referring to FIG. 6, the hybrid battery pack according to embodiments of the present disclosure may include a plurality of battery modules 100 disposed side by side and a redox flow battery 200' disposed at one side of the plurality of battery modules 100 disposed side by side, and an electrolyte path along which an electrolyte circulating in the redox flow battery 200' flows may be disposed between the plurality of battery modules 100. The hybrid battery pack may additionally include a cooling part 300' between the plurality of battery modules 100 disposed side by side and the redox flow battery 200'

The battery module 100 and the redox flow battery 200' are as described herein, and thus descriptions thereof are omitted.

The cooling part 300' may serve to exchange heat with battery cells of the battery module 100 and cool an electrolyte of the redox flow battery 200' which is heated.

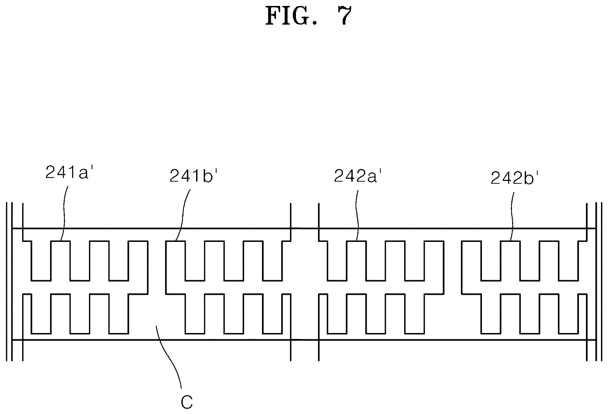

FIG. 7 is an enlarged view of area B of FIG. 6.

Referring to FIG. 7, the cooling part 300' may be filled with a refrigerant C flowing through the cooling part 300', and the refrigerant C may exchange heat with the battery cell of the battery module 100 and may cool the electrolyte of the redox flow battery 200' which is heated. In this case, in order to effectively cool the electrolyte, paths of an inlet side 241a' and an outlet side 241b' in a first electrolyte path and paths of an inlet side 242a' and an outlet side 242b' in a second electrolyte path may be disposed to be elongated in a zigzag shape, thereby improving the efficiency of cooling the electrolyte and simultaneously utilizing a space efficiently.

In this way, a temperature of the electrolyte of the redox flow battery 200', which exchanges heat with the battery cell of the battery module 100 through the cooling part 300' and is heated, may be maintained constant to improve battery cell cooling efficiency. In some embodiments, the temperature of the electrolyte of the redox flow battery 200' may be maintained in a range of 0°C to 40°C to prevent the performance of the redox flow battery 200' from deteriorating.

As a result, in a hybrid battery pack according to embodiments of the present disclosure, the performance of cooling a battery cell may be secured by using an electrolyte circulation structure of a redox flow battery, and at the same time, a cooling space may be replaced with the redox flow battery to improve the capacity of a battery pack.

Although the present disclosure has been described with limited embodiments and drawings, the present disclosure is not limited thereto, and instead, it would be appreciated by those skilled in the art that various modifications and changes may be made to these embodiments without departing from the principles and spirit of the present disclosure, the scope of which is defined by the claims and their equivalents.

According to embodiments of the present disclosure, in a hybrid battery pack according to embodiments of the present disclosure, the performance of cooling a battery cell may be secured by using an electrolyte circulation structure of a redox flow battery, and at the same time, a cooling space may be replaced with the redox flow battery to improve the capacity of a battery pack.

## Claims

1. A hybrid battery pack comprising:
a plurality of battery modules (100) disposed side by side; and
a redox flow battery (200, 200') disposed at one side of the plurality of battery modules (100),
wherein an electrolyte path (241; 242) along which an electrolyte circulating in the redox flow battery (200, 200') flows is disposed between the plurality of the battery modules (100).

2. The hybrid battery pack of claim 1, wherein the redox flow battery (200, 200') comprises:
a positive electrode cell (210);
a negative electrode cell (220) disposed to face the positive electrode cell (210);
a separator (230) disposed between the positive electrode cell (210) and the negative electrode cell (220);
a pump (250) configured to circulate the electrolyte;
a first electrolyte path (241) along which the electrolyte flows; and
a second electrolyte path (242) along which the electrolyte flows.

3. The hybrid battery pack of claim 2, wherein the plurality of battery modules (100) are divided and disposed at each of the positive electrode cell (210) and the negative electrode cell (220) of the redox flow battery (200, 200').

4. The hybrid battery pack of claim 3, wherein:
the plurality of battery modules (100) disposed at the positive electrode cell (210) are surrounded by the first electrolyte path (241), and
the plurality of battery modules (100) disposed at the negative electrode cell (220) are surrounded by the second electrolyte path (242).

5. The hybrid battery pack of claim 4, wherein:
the plurality of battery modules (100) each comprise a plurality of battery cells (10), and
the battery cells (10) comprise prismatic battery cells.

6. The hybrid battery pack of claim 5, wherein the first electrolyte path (241) or the second electrolyte path (242) is configured to cover at least three surfaces of each of the battery cells and is disposed in a zigzag shape between the battery cells (10) adjacent to one another.

7. The hybrid battery pack of claim 6, wherein the first electrolyte path (241) or the second electrolyte path (242) is further configured to cool the battery cells (10).

8. The hybrid battery pack of any one of claims 2 to 7, wherein:
the positive electrode cell (210) comprises a positive electrode and a positive electrode electrolyte, and
the negative electrode cell (220) comprises a negative electrode and a negative electrode electrolyte.

9. The hybrid battery pack of any one of claims 1 to 8, further comprising a cooling part (300') disposed between the plurality of battery modules (100) and the redox flow battery (200').

10. The hybrid battery pack of claim 9 in combination with any one of claims 2 to 8, wherein:
the first electrolyte path (241) or the second electrolyte path (242) comprises an inlet side (241a'; 242a') and an outlet side (241b'; 242b'), and
the inlet side (241a'; 242a') and the outlet side (241b'; 242b') are disposed in the cooling part (300').

11. The hybrid battery pack of claim 10, wherein the inlet side (241a'; 242a') and the outlet side (241b'; 242b') are disposed in a zigzag shape in the cooling part (300').

12. The hybrid battery pack of any one of claims 1 to 11, wherein the plurality of battery modules (100) and the redox flow battery (200, 200') operate independently.
